Europäisches Patentamt

European Patent Office

Office européen des brevets

(19)

(11) Publication number: **0 015 963**
**B1**

(12) **EUROPEAN PATENT SPECIFICATION**

(45) Date of publication of patent specification: **18.04.84**

(51) Int. Cl.³: **G 03 B 7/10, G 03 B 15/05**

(21) Application number: **79900447.8**

(22) Date of filing: **19.04.79**

(86) International application number:
**PCT/US79/00252**

(87) International publication number:
**WO 79/00962 15.11.79 Gazette 79/23**

(54) **PHOTOGRAPHIC EXPOSURE CONTROL DEVICE FOR FLASH EXPOSURE.**

| | |
|---|---|
| (30) Priority: **21.04.78 US 898546** | (73) Proprietor: **POLAROID CORPORATION**<br>**549 Technology Square**<br>**Cambridge, Massachusetts 02139 (US)** |
| (43) Date of publication of application:<br>**01.10.80 Bulletin 80/20** | (72) Inventor: **BIBER, Conrad H.**<br>**120 Stratford Road**<br>**Needham, MA 02192 (US)**<br>Inventor: **JOHNSON, Bruce K.**<br>**27 Summer Street**<br>**Andover, MA 01810 (US)**<br>Inventor: **WHITESIDE, George D.**<br>**4 Robbins Road**<br>**Lexington, MA 02173 (US)** |
| (45) Publication of the grant of the patent:<br>**18.04.84 Bulletin 84/16** | |
| (84) Designated Contracting States:<br>**CH DE FR GB** | |
| (56) References cited:<br>**DE - A - 2 418 443**<br>**US - A - 3 522 764**<br>**US - A - 3 972 058**<br>**US - A - 3 994 007**<br>**US - A - 4 020 497**<br>**US - A - 4 047 190**<br>**US - A - 4 063 257**<br>**US - A - 4 065 776**<br>**US - A - 4 149 792** | (74) Representative: **Abbott, Leonard Charles et al,**<br>**GILL JENNINGS & EVERY 53-64 Chancery Lane**<br>**London WC2A 1HN (GB)** |

Courier Press, Leamington Spa, England.

Photographic exposure control device for flash exposure

This invention relates to a method of and apparatus for recording an image as by photography of a subject under flash illumination with optimum exposure independent of the range of the subject.

In the photographic art, exposure systems employing a diaphragm or scanning shutter having an exposure aperture area that varies with time during the exposure interval are known. Representative patents showing scanning shutters are U.S. Patent No. 3,762,299; U.S. Patent No. 3,972,058 and U.S. Patent No. 4,047,190. In the above patents, a scanning shutter is described which includes a pair of counter reciprocal blades each having a primary aperture that traverses the optical axis of the camera during the exposure interval. These primary apertures are shaped so that upon overlying one another during counter movement of the blades, the exposure aperture value, defined in part by one primary aperture and in part by the other primary aperture, increases from zero to a maximum value in a preselected period of time.

In these arrangements, exposure control is exerted by a summing or integrator circuit the resistance of which is constituted by a photocell located behind a photocell aperture formed by secondary apertures in the blades. The photocell aperture value, too, is changed with time, the change being related to the change in the exposure aperture value to provide proper exposure control over a wide range of conditions. The photocell aperture which controls the scene light admitted to the photocell opens simultaneously with or in slightly leading arrangement to passage of first light through the exposure aperture, and when the integrator reaches a given level, a trigger circuit is fired to reverse the movement of the blades, which are rapidly returned to their initial light blocking position.

These known diaphragm shutter systems and exposure controls operate in an ambient as well as a flash mode of operation. The shape of primary and secondary blade apertures is, therefore, important for obtaining proper exposures in either modes. For the flash mode of operation, the blades are stopped at a position resulting in an aperture value related to the position of the camera lens, i.e., to the subject range. Hence, the aperture values are varied prior to flash firing; yet a preselected fixed aperture is actually provided during the flash pulse.

Scanning shutters which utilize varying apertures during the flash pulse are also known from U.S. Patent Nos. 3,570,381 and 4,020,497. In these systems a flash firing switch is adjusted in accordance with lens focusing so that the flash will coincide with a range of aperture values. The range of aperture values is selected automatically in accordance with lens focusing and, hence, subject range. While such flash systems provide satisfactory flash exposure in many instances, they are dependent upon movable switches which is subject to mechanical position errors.

In U.S. Patent No. 4,047,191, a system is disclosed in which an incandescent flash is ignited at the same time as or just prior to opening of a scanning shutter. The flash illumination accordingly is superimposed in a leading arrangement on the aperture opening curve to provide increasing illumination intensity.

Another flash exposure system is suggested by U.S. Patent No. 3,794,422. Here the transmissivity of an electro-optical shutter is varied with a view to providing uniform exposure of all subjects within the flash range. In this arrangement, the shutter is varied from a blocking condition of relatively low transmissivity to maximum transmissivity during the duration of the flash. A subject relatively close to the camera, would be relatively brightly illuminated but for the fact that the light reflected from the close subject is received by the shutter when its transmissivity is relatively low. Under such condition, the shutter attenuates relatively strongly light reflected from a close range so only a predetermined amount passes. However, where the ubject is relatively distant, substantially the same amount of light passes even though the subject reflects less light because by the time the light is reflected from the distant subject the shutter transmissivity has increased to a level functionally related to the distance or this dimmer light, as the case may be. Such an arrangement may at least in theory be possible; but the requirements for such an electro-optical shutter present severe complications in terms of size, weight and expense both in the shutter itself and the modulator required to produce the change in transmissivity. Since the shutter is called upon to function with a speed in the order of the speed of light, the precision required for the flash device and its firing time is also unduly burdensome.

In U.S. Patent No. 3994007, a variable resistor connected in an integrating circuit is set to a value which takes into account various factors, including the distance of the subject to be photographed and the film sensitivity. After initiation of the exposure cycle, integration commences with the opening of a shutter/-aperture blade arrangement and when the output of the integrator reaches a predetermined trigger level, the flash takes place at the existing aperture value and the shutter/aperture blade arrangement starts to close.

U.S. Patent No. 4065776 also discloses a camera having a shutter/aperture blade arrangement. A variable resistor is coupled to a focusing ring and is thereby adjusted, prior to an exposure cycle, in accordance with subject distance. During the exposure cycle, the value of the variable resistor controls a circuit generating a train of pulses, the number of which is a function of the subject distance. The pulses cause progressive opening of the aperture, the last pulse of the train operating a flash device.

Also, DE—A—2418443 discloses an exposure control circuit employing an integrating circuit, including a resistor adjusted in accordance with the focused position of a lens, to control the timing of a flash during increasing aperture area.

It is an object of the present invention to provide an improved device for, photographing a subject under flash illumination to achieve an optimum exposure with such transient illumination.

A photographic exposure control device for flash exposure, in accordance with the invention, comprises a diaphragm shutter the blades of which after release define a progressively increasing exposure opening, and means whereby a flash fire signal is generated when the size of the exposure opening bears a predetermined relationship with the range-representing signal, and is characterized in that following the initiation of a photographic exposure cycle the range-representing signal is generated, in known manner, by a sonar ranging device as a function of the time interval from the transmission of a sonic ranging pulse to the receipt of an echo thereof, and in that the flash fire signal is provided, and the size of the progressively increasing exposure opening bears the said predetermined relationship to the range-representing signal, after a time interval, starting with the initiation of the opening of the shutter blades, controlled by the signal representing the range.

Sonar ranging devices have previously been proposed for use with photographic cameras: such a device is disclosed in our U.S. Patent No. 3,522,764.

Where ambient (steady state) illumination is negligible, the timed interval and the flash firing time (following first light through the shutter) are equal; however, ambient light can be compensated for in accordance with a subsidiary feature of the present invention by triggering the flash after a period dependent on both the ambient light and subject range.

In one of the illustrated embodiments, the sonic rangefinder is utilized for actuating an integrator circuit after an interval of time, subsequent to transmission of a sonic burst, to provide a flash fire time proportional to the range of the subject returning the echo. The integrator includes a resistor in parallel with a photocell exposed to light from the scene, and a trigger circuit responsive to the output of the integrator for firing the flash and closing the shutter when the output reaches a predetermined trigger level. Preferably, the opening of the shutter (i.e., first light) is delayed, after transmission of the sonic burst, by a length of time which is equal to the time which the integrator requires for its output to reach the trigger level when the ambient light on the photocell is negligible. Therefore, at a very low level of ambient light essentially the resistor only is effective in the integrator to trigger the flash and close the shutter a fixed time after the detection of an echo, the fixed time being equal to the delay time in opening the shutter. When ambient light is present, it contributes to the integrator summing to reduce the flash fire time in accordance with the ambient level and the scan rate such that the firing of the flash and closing of the shutter occurs sooner, i.e., at a smaller aperture, than would be the case were the integrator time-out determined solely by the resistor. Consequently, the flash is fired before the exposure aperture area has reached its optimum size with respect to the range of the subject. This reduces the amount of light transmitted through the shutter from the subject due to its flash illumination. This reduction in flash illumination is balanced by the ambient light present such that a proper exposure is obtained.

Embodiments of the present invention are disclosed in the accompanying drawings wherein:

Figure 1 is a composite plot showing the variation in brightness of a subject under flash illumination as a function of distance of the subject to a camera, and the variation in exposure aperture area;

Figure 2 is a block diagram of the preferred embodiment of the invention for photographing an object illuminated by both flash and ambient light;

Figure 3 is a series of plots showing the time relationship between actuation of the shutter and the firing of the flash when ambient scene light is negligible;

Figure 4 is a plot similar to Figure 3 but considering ambient light present in the photographic scene under exposure; and

Figure 5 illustrates an alternative embodiment of the system of Figure 2 and depicts an arrangement for providing a flash fire interval as a non-linear function of subject range.

The present invention utilizes a scanning shutter the program, i.e., the time-wise variation in exposure aperture area, of which is selected such that if A is the instantaneous area of the aperture when the flash occurs, and if B is the brightness of the subject illuminated by the flash, $A \times B$ is a constant which is independent of range. Therefore, the amount of transient scene light incident on the photographic film through the shutter is always the same. With a given film speed and light output of the flash, proper exposure of the film is assured independently of subject range up to a maximum range determined by the maximum size of the exposure aperture area and the flash output, assuming ambient scene light is negligible.

The term "flash" is intended to include any transient light pulse and while the invention is preferably practiced with an electronic flash or strobe the pulse duration of which is short compared to the scan time of the shutter, it is no less applicable to light pulses of longer duration, such as those from incandescent flash units.

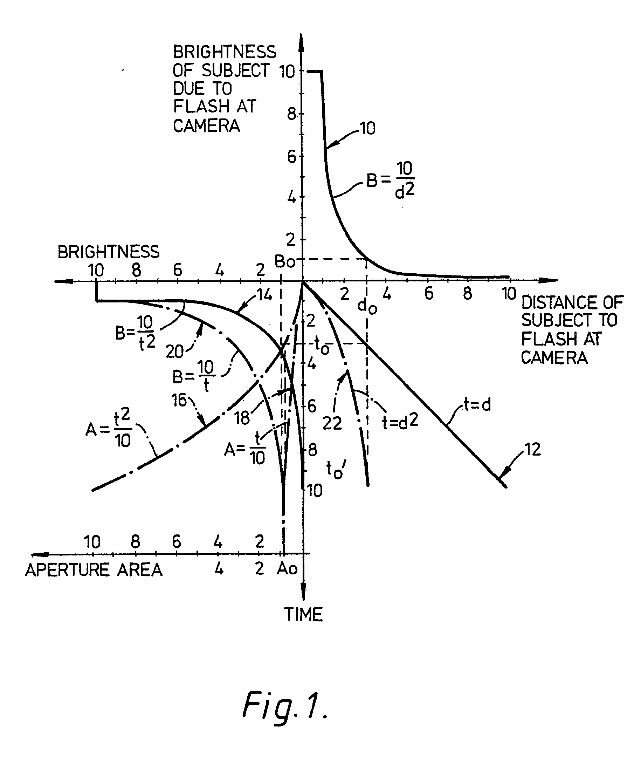

The manner in which a program for a scanning shutter can be selected is illustrated in Fig. 1. The scales have been chosen to fit the curves onto the space available and are of no significance to the present invention. Curve 10 shows the variation in brightness of a subject under illumination by a flash of given output, as a function of subject range from the flash source, or from the camera where the flash is relatively close thereto. Curve 10 demonstrates the inverse square relationship between subject brightness and range, i.e., $B \triangleq f(I/d^2)$.

In a sonar ranging device, the echo interval is a linear function of subject distance, as indicated by curve 12. Consequently, the brightness of the subject under illumination by flash is a function of this echo interval, that is to say, the inverse square relationship exists between the subject brightness and the echo interval, as indicated by curve 14. Curve 14 does not infer that the brightness of a subject illuminated by flash changes with time, but merely shows that if the echo interval for a subject is $t_o$, the brightness of the subject illuminated by flash is $B_o$.

The shape of exposure apertures in flat blades for a diaphragm or scanning shutter can be designed so that the exposure aperture area of the scanning shutter varies with the square of time as shown by curve 16 in Figure 1 and is inversely related to curve 14. In such a case, the firing of the flash after an interval $t_o$ from first light through the aperture results in an aperture area $A_o$ for the subject brightness $B_o$.

The shape of exposure apertures in flat blades for a diagram or scanning shutter need not result in a time-squared programme; the programme can in fact be linear or have an arbitrary time variation dependent only on the relationship between the range (or echo time) and the flash fire interval. For example, it may be desirable to have a linear scan programme rather than a time-squared programme for mechanical or design reasons or to fit an existing scanning shutter camera to practice the present invention. Curve 18 represents such a linear programme for the scanning shutter. A corresponding inverse brightness curve is shown at 20 and the curve 22 shows the variation of flash fire interval with range (and therefore with echo interval) which would be necessary for the product of A and B to remain constant.

The embodiments described below are illustrative of movable lens cameras which employ subject ranging to position the lens, that is, however, quite separate from range firing of the flash, and the latter may be employed with a fixed lens or fixed focus cameras.

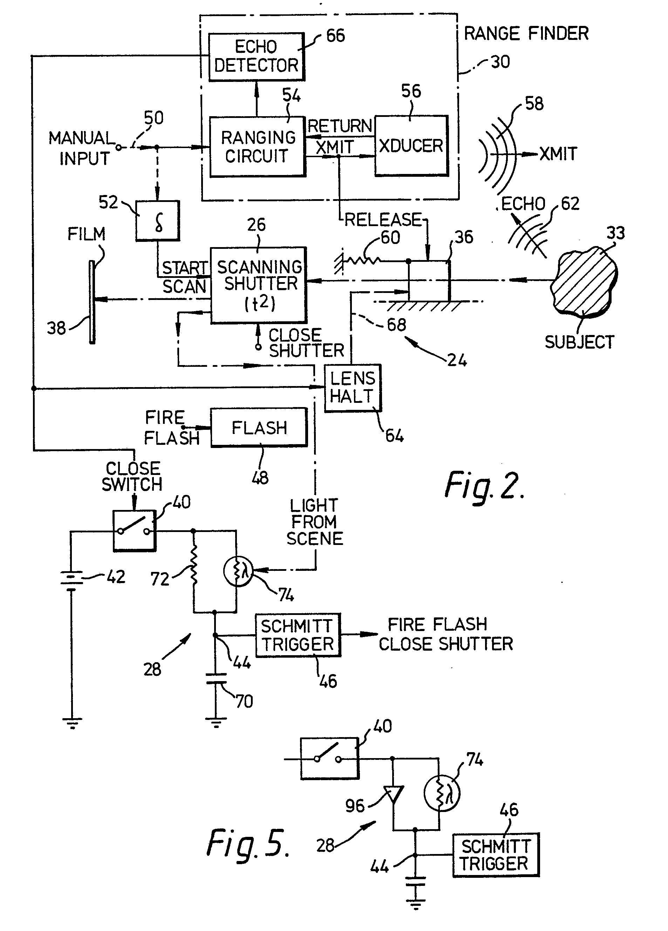

In the arrangement shown in Figure 2 the sonic rangefinder is used in conjunction with a delayed opening of the shutter so that flash fire time predicted by the sonic range time may be reduced to take ambient light into consideration.

In Figure 2, a camera 24 incorporates an embodiment of the invention utilising a scanning shutter 26 having a $t^2$ programme and a linear relationship between range and flash fire delay, by reason of an integrator 28. A sonar rangefinder 30 automatically focuses a movable lens 36 in accordance with the range of the subject 33 in response to a manual input 50. The manual input 50 to the rangefinder causes a ranging circuit 54 to issue a transmit command to a sonic transducer 56 causing a burst of sonic energy 58 to be emitted, substantially coincident with manual input 50; it also initiates movement of the lens 36.

The manual input 50 also actuates the scanning shutter 26 after a predetermined delay $\delta$ provided by a delay circuit indicated by block 52.

An echo detector 66 which detects echo 62 from the subject, after processing of the echo signal by the ranging circuit, closes a switch 40 associated with the integrator 28 and actuates a lens-halt circuit 64 to arrest the lens movement over path 68. When the switch 40 closes, a power source, illustrated as a battery 42, is coupled to the integrator and the voltage at the output node 44 of the integrator begins to increase exponentially in accordance with the value of a capacitor 70 and the effective value of the resistance of the integrator, which comprises the parallel combination of a fixed resistor 72 and a photodiode 74 located behind the photocell aperture of the scanning shutter and exposed to light from the scene being photographed when first light passes the exposure aperture of the shutter. When the voltage at node 44 reaches the trigger level, Schmitt trigger 46 fires flash 48 to expose a film 38 by way of the scanning shutter aperture and terminates the scanning operation of the shutter by closing the shutter.

The timing of the flash in accordance with subject range during shutter scanning synchonizes the flash with a narrow range of apertures in accordance with subject distance, and for an electronic flash, effectively synchronizes the short pulse of illumination with essentially a fixed aperture. That is, in the latter case, any change in aperture during the extremely short flash pulse can often be considered to have minimal effect on the expected exposure.

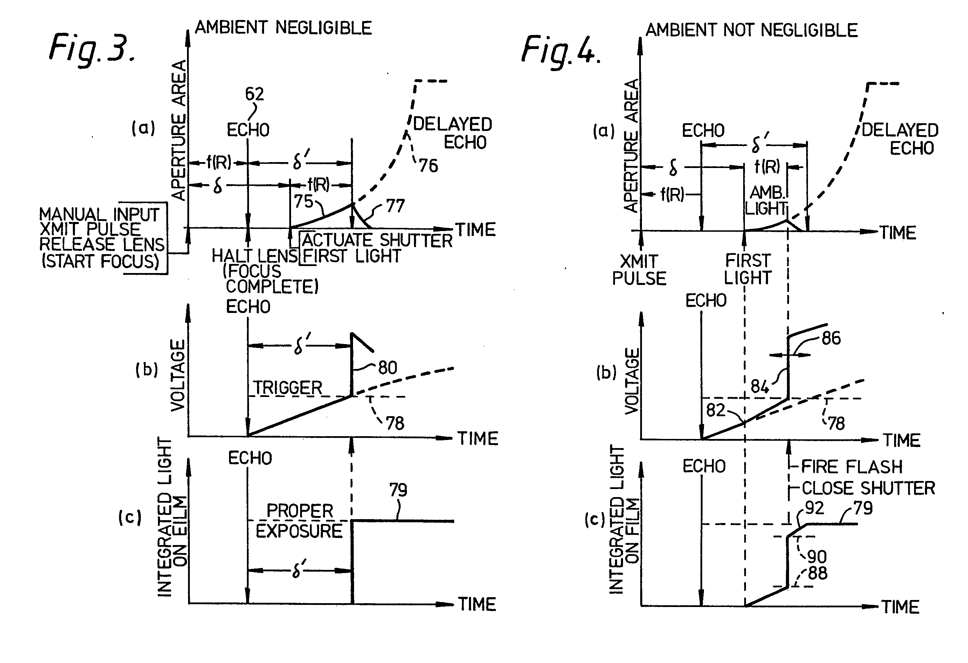

The manner in which the apparatus shown in Figure 2 achieves proper exposure over a wide range of ambient lighting conditions is set forth in Figures 3 and 4. The flash is presumed to be an electronic flash which provides a pulse of relatively short duration. Figure 3 relates to the condition in which ambient light is negligible. In Figure 3(a), the possible variation in aperture area of the scanning shutter as a function of time is shown by curve 76. In camera 24, as described with regard to Figure 2, the shutter is actuated so that first light occurs after a time interval $\delta$ following manual input 50. Since this time interval is equal to or longer than the time required for an echo to be received from an object located within the maximum flash range of the camera, Figure 3(a) shows that receipt of echo 62 occurs within the interval $\delta$, and follows the manual input by a period of time functionally related to the range of the object. Thus, switch 40 (Figure 2) is closed prior to first light through the scanning shutter with the result that battery 42 is connected to integrator 28 coincident with receipt of echo 62. However, since the ambient light is negligible, the resistance of photodiode 74 is high, and the effective resistance of the integrator circuit is essentially the resistance of the resistor 72 which is selected such that the trigger level at node 44 is reached after a time interval $\delta'$. The "delayed echo", i.e., the output of the Schmitt trigger 46, therefore, occurs after a period of time $\delta'$ following echo 62 as shown in Figure 3(a). The flash 48 is fired and the close command applied to the shutter 26 in response to triggering of the trigger 46 which is after first light through the shutter by a delay equal to the period of time between receipt of the echo 62 and the instant of manual input 50. In other words, the flash fire time measured from the instant of camera actuation is equal to the sum of the range related time plus the shutter delay $\delta$. The solid portion 75 of curve 76 represents the change in area from first light to receipt of the closing command. Curve 77 represents the change in area as the shutter responds to the closing command.

Referring now to Figure 3(b), the voltage at node 44 is shown as increasing from zero at the instant of receipt of echo 62 and reaching the trigger level 78 after a period of time $\delta'$ equal to the delay time $\delta$. Upon reaching the trigger level 78, the Schmitt trigger 46 fires flash 48 and closes the shutter. At that time, photocell 74 responds to the impulse-like light output of flash 48 by a sudden decrease in its resistance to a level related to subject range. This produces the steplike increase 80 in the voltage at node 44. However, since the Schmitt trigger has already been tripped, the increase in voltage is of no consequence.

The amount of light incident on the film 38 behind the scanning shutter 26 is shown in Figure 3(c). During the time interval $\delta'$, essentially no light falls on the film since ambient light is negligible. As soon as the Schmitt trigger 46 detects the trigger level at node 44 and fires the flash, the light incident on the film increases to level 79. This level depends upon the product of the light reflected from the object and the area of the shutter aperture substantially at the instant the flash is fired, since flash firing and flash output occur substantially simultaneously, and that the light pulse is very short, as normally produced by electronic strobes. By proper selection of the exposure determining parameters of film speed, light output of the flash, and the design of the scanning shutter, a proper exposure of the film is obtained independently of subject range. The finite closing time of the shutter does not affect the amount of light incident on the film because substantially all of the light came from the very short duration flash.

Where ambient scene light is not negligible, the photocell 74 contributes to film exposure by advancing in time the instant at which the flash is fired. As shown in Figure 4(a), detection of echo 62 actuates the integrator 28 before first light, and the voltage at node 44 (Figure 2) initially begins to increase exponentially in the manner shown in Figure 3(b). At time $\delta$ following manual input 50 when first light impinges on the film behind shutter 26, first light also falls on photocell 74. The resistance of the photocell 74 and, hence, the time constant of the integrator 28 are reduced in accordance with the amount of ambient light resulting in the break, shown at 82 in Fig. 4(b), in the summing rate of the output of the integrator. Therefore, the voltage output increases more rapidly and reaches the trigger level 78 in a time shorter than $\delta'$, depending on the amount of ambient light. Hence, the instant in time selected for flash firing is advanced in accordance with the ambient light. Double-ended arrow 86 indicates the time-wise positions of step 84 which are dependent on both subject range and the ambient light level.

When the flash is fired by the Schmitt trigger 46 the resistance of the photodidode 74 is rapidly reduced as in the embodiment described above in connection with negligible ambient light, and a step-like increase 84 occurs in the voltage at the output node 44 of the integrator. As the shutter closing signal is applied to the shutter by the trigger 46 at the same time as the flash is fired, the contribution of the ambient light to the exposure is essentially that occurring before the flash.

The amount of light incident on the film 38 as a consequence of ambient light and flash illumination is shown in Figure 4(c). During the time interval between reception of the echo and first light, no light at all is incident on the film. Between first light and firing of the flash ambient light enters the exposure aperture in increasing amounts as the exposure aperture enlarges. Before firing of the flash the light integrated is at a level 88 depending on the intensity of the ambient scene light. As soon as the trigger 46 detects the predetermined voltage level at node 44, the flash is ignited and light incident on the film increases rapidly. However, since the size of the exposure aperture at the instant of flash firing is smaller than it would be if firing of the flash occurs at the end of the interval δ' (as in Figure 4c), the contribution of the flash to the exposure is reduced to compensate for the ambient light. The exposure, due to flash as well as ambient light before flash, reaches the level 90, and because of the finite closing time of the shutter, ambient light continues to contribute slightly to film exposure after the short flash pulse as indicated by segment 92 in Fig. 4(c). By the time the shutter is completely closed, the exposure light will have reached level 79 which, as previously indicated, is sufficient to expose the film properly.

The delay in shutter actuation and the delay in firing the flash have been considered equal. This assumes that shutter actuation and first light occur simultaneously. In practice, however, the flash fire delay is slightly longer than the shutter actuation delay by an amount equal to the difference between shutter actuation and first light.

In Figure 5, the flash firing circuit of Figure 2 is shown in an alternative embodiment to provide a flash fire interval which is a non-linear function of the subject range for use with a shutter scan rate having other than a time squared program. In this figure, the resistor 72 is replaced by a diode 96 which provides a flash fire time interval as a logarithmic function of the subject range for use with a linear shutter scan rate.

The flash firing time interval may be varied to suit different scan rates by adding a plurality of diodes (not shown) with appropriate series resistors to produce any desired functional relationship between the subject distance and the flash fire time interval. For instance, the sonar rangefinding means of Figure 2 for defining a time interval linearly related to subject distance may be used with means (switch 40 and diode 96) for converting the above time interval to a flash fire interval non-linearly related to subject distance to accommodate a selected shutter scanning function.

It is believed that the advantages and improved results furnished by the apparatus of the present invention are apparent from the foregoing description of embodiments of the invention.

## Claims

1. Photographic exposure control device for flash exposure, comprising a ranging device for generating a range-representing signal, a diaphragm shutter (26) the blades of which after release define a progressively increasing exposure opening, and means whereby a flash fire signal is generated when the size of the exposure opening bears a predetermined relationship with the range-representing signal, characterized in that following the initiation of a photgraphic exposure cycle the range-representing signal is generated, in known manner, by a sonar ranging device (30) as a function of the time interval from the transmission of a sonic ranging pulse to the receipt of an echo thereof, and in that the flash fire signal is provided (48), and the size of the progressively increasing exposure opening bears the said predetermined relationship to the range-representing signal, after a time interval, starting with the initiation of the opening of the shutter blades (26), controlled by the signal representing the range.

2. A photographic exposure control device in accordance with claim 1, further including a delay circuit (52) actuated simultaneously with the ranging device (30), an output of the delay circuit controlling the actuation of the shutter so that such actuation takes place after a delay at least as long as the time required for the echo of the sonic pulse to be received from a subject located at the maximum flash range, and a timing circuit (70, 72), the operation of which is initiated by the receipt of the echo and which, when its output reaches a predetermined threshold, fires the flash.

3. A photographic exposure control device in accordance with claim 2, in which the time interval required for the timing circuit to reach the predetermined threshold is equal to the delay provided by the delay circuit (52).

4. A photographic exposure control device in accordance with claim 2 or 3, in which the timing circuit comprises a resistor (72) and a capacitor (70) and in which a photoconductive device (74) exposed to scene light is connected in parallel to the said resistor to shorten the time required by the timing circuit to reach its threshold level in the presence of ambient light.

## Revendications

1. Dispositif de commande d'exposition photographique pour l'exposition par flash, comprenant un dispositif de mesure de distance qui produit un signal représentant une distance, on obturateur à diaphragme (26) dont les lamelles définissent, après leur libération, une ouverture d'exposition qui croît progressivement et un dispositif par lequel un signal de déclenchement de flash est produit qu and la dimension de l'ouverture répond à une relation prédéterminée avec le signal représentant la distance, caractérisé en ce que, après le déclenchement d'un cycle d'exposition photographique, le signal représentant une distance est produit, d'une manière connue par un dispositif télémétrique sonore (30) en fonction de l'intervalle de temps depuis l'émission d'une impulsion de distance sonore jusqu'à la réception de son échoe et en ce que le signal de déclenchement de flash est produit (48) et la dimension de l'ouverture d'exposition croissante progressivement répond à ladite relation prédéterminée avec le signal représentant la distance, après un intervalle de temps commençant avec le déclenchement de l'ouverture de lamelles d'obturateur (26) commandées par le signal représentant la distance.

2. Dispositif de commande d'exposition photographique selon la revendication 1, comprenant en outre un circuit à retard (52) actionné simultanément avec le dispositif télémétrique (30), une sortie du circuit à retard commandant l'actionnement de l'obturateur de manière que cet actionnement se fasse après un retard aussi long que le temps nécessaire pour que l'écho de l'impulsion sonore soit reçu depuis un sujet situé à la distance maximale de flash, et une circuit de temporisation (70, 72) dont le fonctionnement est déclenché par la réception de l'écho et qui, quand sa sortie atteint un seuil prédéterminé, déclenche le flash.

3. Dispositif de commande d'exposition photographique selon la revendication 2, dans lequel l'intervalle de temps nécessaire pour que le circuit de temporisation atteigne le seuil prédéterminé est égal au retard introduit par le circuit à retard (52).

4. Dispositif de commande d'exposition photographique selon la revendication 2 ou 3, dans lequel le circuit de temporisation consiste en une résistance (72) et un condensateur (70) et dans lequel un dispositif photoconducteur (74) exposé à la lumière de la scène est connecté en parallèle avec ladite résistance pour raccourcir le temps nécessaire au circuit de temporisation pour atteindre son niveau seuil en présence de lumière ambiante.

**Patentansprüche**

1. Fotografische Belichtungssteuervorrichtung für Blitzbelichtungen mit einem Entfernungsmesser, der ein die Entfernung repräsentierendes Signal erzeugt, mit einem Blendenverschluß (26), dessen Lamellen nach ihrer Freigabe eine sich progressiv vergrößernde Belichtungsöffnung definieren und mit Mitteln, die ein Blitzzündsignal erzeugen, wenn die Größe der Belichtungsöffnung eine vorbestimmte Beziehung zu dem die Entfernung repräsentierendem Signal aufweist, dadurch gekennzeichnet, daß nach Einleitung eines fotografischen Belichtungszyklus das die Entfernung repräsentierende Signal in bekannter Weise durch einen Schallentfernungsmesser (30) als Funktion des Zeitintervalls erzeugt wird, welches zwischen der Abstrahlung eines Schallentfernungsimpulses bis zum Empfang eines Echos verstreicht, und daß das Blitzzündsignal geliefert wird (48) und die Größe der sich progressiv vergrößernden Belichtungsöffnung die vorbestimmte Beziehung zum dem die Entfernung repräsentierenden Signal nach einem Zeitintervall aufweist, welches mit der Einleitung der Öffnungsbewegung der Verschlußlamellen (26) beginnt, gesteuert durch das die Entfernung repräsentierende Signal.

2. Fotografische Belichtungssteuervorrichtung gemäß Anspruch 1, welche außerdem eine Verzögerungsschaltung (52) aufweist, die gleichzeitig mit dem Entfernungsmesser (30) betätigt wird, wobei ein Ausgang der Verzögerungsschaltung die Betätigung des Verschlusses derart steuert, daß diese Betätigung stattfindet, nachdem eine Verzögerungszeit verstrichen ist, die wenigstens so lang ist wie die Zeit, die erforderlich ist um das Echo eines Schallimpulses von einem Gegenstand zum empfangen, der innerhalb des maximalen Blitzbereiches angeordnet ist, und wobei eine Zeitgeberstufe (70, 72) vorgesehen ist, deren Betätigung durch Empfang des Echos eingeleitet wird, und die den Blitz zündet, wenn ihr Ausgang einen vorbestimmten Pegel erreicht.

3. Fotografische Belichtungssteuervorrichtung gemäß Anspruch 2, bei welcher as Zeitintervall, welches für die Zeitgeberstufe erforderlich ist, um den vorbestimmten Pegel zu erreichen, gleich ist der Verzögerung, die durch die Verzögerungsschaltung (52) erzeugt wird.

4. Fotografische Belichtungssteuervorrichtung gemäß den Ansprüchen 2 oder 3, bei welcher die Zeitgeberschaltung einen Widerstand (72) und einen Kondensator (70) umfaßt, und bei der eine fotoleitfähige Vorrichtung (74), die dem Szenenlicht ausgesetzt ist, parallel zu dem Widerstand geschaltet ist, um die Zeit zu verkürzen, die von der Zeitgeberstufe benötigt wird, um den Schwellwertpegel in Gegenwart von Tageslicht zu erreichen.

*Fig.1.*

Fig.2.

Fig.5.

Fig. 3.

(a) AMBIENT NEGLIGIBLE

APERTURE AREA

DELAYED ECHO
76
77
75
ECHO
62
f(R)
δ
δ'
f(R)

MANUAL INPUT
XMIT PULSE
RELEASE LENS
(START FOCUS)

ACTUATE SHUTTER
FIRST LIGHT
HALT LENS
(FOCUS COMPLETE)

TIME

(b) VOLTAGE

80
78
δ'
ECHO
TRIGGER

TIME

(c) INTEGRATED LIGHT ON FILM

79
PROPER EXPOSURE
δ'
ECHO

TIME

Fig. 4.

(a) AMBIENT NOT NEGLIGIBLE

APERTURE AREA

DELAYED ECHO
δ'
f(R)
AMB. LIGHT
ECHO
δ
f(R)
XMIT PULSE
FIRST LIGHT

TIME

(b) VOLTAGE

86
84
82
78
ECHO
FIRE FLASH
CLOSE SHUTTER

TIME

(c) INTEGRATED LIGHT ON FILM

92
90
88
79
ECHO

TIME